(19) Europäisches Patentamt
European Patent Office
Office européen des brevets

(11) EP 4 462 510 A1

(12) **EUROPEAN PATENT APPLICATION**
published in accordance with Art. 153(4) EPC

(43) Date of publication:
**13.11.2024 Bulletin 2024/46**

(21) Application number: **23865818.1**

(22) Date of filing: **12.09.2023**

(51) International Patent Classification (IPC):
***H01M 4/48*** *(2010.01)* ***H01M 10/0525*** *(2010.01)*
***G01N 23/20*** *(2018.01)* ***H01M 4/02*** *(2006.01)*

(52) Cooperative Patent Classification (CPC):
**G01N 23/20; H01M 4/02; H01M 4/48; H01M 10/0525;** Y02E 60/10

(86) International application number:
**PCT/KR2023/013610**

(87) International publication number:
**WO 2024/058521 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 KR 20220116792**

(71) Applicant: **LG Energy Solution, Ltd.**
**Seoul 07335 (KR)**

(72) Inventors:
- **LEE, Eun Ju**
  **Daejeon 34122 (KR)**
- **RAH, Kyun Il**
  **Daejeon 34122 (KR)**
- **KANG, Joonhyeon**
  **Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**

# (54) METHOD FOR CALCULATING BATTERY CAPACITY CHARACTERISTICS

(57) The present invention relates to a method for calculating battery capacity characteristics, the method including: an anode electrode preparation step for preparing an anode electrode in which graphite and a SiO-based material to be tested are mixed; a charging step for charging a battery including the negative electrode; a data collection step for observing the negative electrode using XRD and thereby collecting time series data for $C_{Li}$ which is the peak value of Li, $C_6(t)$ which is the peak value of $Li_2C_{12}$, and $C_{12}(t)$ which is the peak value of $LiC_{12}$; and a parameter calculation step for calculating parameter K, which is a parameter indicating the battery capacity characteristics, on the basis of the $C_{Li}$, $C_6(t)$, and $C_{12}(t)$ when the time differential value for the $C_6(t)$ or the $C_{12}(t)$ is 0, and to a battery in which the value of parameter K is at least 12 times the weight fraction of the SiO-based material in the negative electrode.

[FIG. 1]

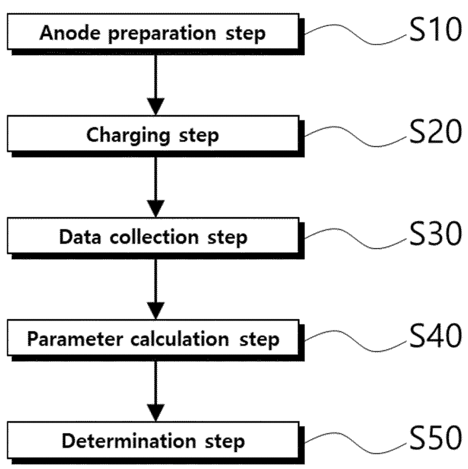


EP 4 462 510 A1

## Description

### Technical Field

The present application claims the benefit of priority based on Korean Patent Application No. 10-2022-0116792 filed on September 16, 2022, the entire disclosure of which is incorporated as a part of this specification.

The present disclosure relates to a method for calculating battery capacity characteristics, and more particularly, to a method for calculating battery capacity characteristics that calculates parameters relating to capacity characteristics of a battery equipped with an anode containing an SiO-based material.

### Background Art

For a secondary battery, an energy density of the battery is the most important characteristic. High energy density can extend the usage time of portable devices and is expected to extend the driving range of electric vehicles.

Lithium-ion batteries have surpassed all other previously competing batteries (e.g., lead acid batteries, nickel hydride batteries, etc.), but higher energy densities are still required.

One of the developments in high energy density of batteries is increasing the capacity of an anode. High capacity of the anode may be achieved by using an anode in which graphite is mixed with silicon monoxide (SiO). However, silicon monoxide forms lithium silicate which is a lithium consumption product with little reactivity, and may be a material with a very large initial irreversible capacity.

$$Li_2C_{12} \rightleftharpoons LiC_{12} + Li$$

$$4SiO + (4t3x)Li \rightarrow Li_4SiO_4 + 3Li_xSi$$

In order to improve this, silicon monoxide (SiO) is chemically doped with materials such as lithium (Li) or magnesium (Mg) to increase efficiency at the material level.

However, since there is no standard for what characteristics highly efficient silicon monoxide has to ensure stable lifespan in a mixing application cell, a technology that can define this is needed.

### Disclosure of the Invention

### Technical Goals

The present disclosure relates to a method for calculating battery capacity characteristics, and is to provide a method for calculating battery capacity characteristics that calculates parameters relating to capacity characteristics of a battery equipped with an anode containing an SiO-based material.

Technical objects to be achieved by the present disclosure are not limited to the technical objects mentioned above, and other technical objects that are not mentioned will be clearly understood by those skilled in the art from the description below.

### Technical Solutions

A method for calculating battery capacity characteristics of the present disclosure may include:

an anode preparation step of preparing an anode in which graphite is mixed with a test target SiO-based material;
a charging step of charging a battery including the anode;
a data collection step of collecting time series data for $C_{Li}$ which is a peak of Li, $C_6(t)$ which is a peak of $Li_2C_{12}$, and $C_{12}(t)$ which is a peak of $LiC_{12}$ by observing the anode with XRD; and
a parameter calculation step of calculating K which is a parameter for battery capacity characteristics based on the $C_{Li}$, $C_6(t)$, and $C_{12}(t)$ values, when a time differential value for the $C_6(t)$ or the $C_{12}(t)$ is 0.

### Advantageous Effects

A method for calculating battery capacity characteristics of the present disclosure may be to select SiO-based

materials by quantifying a reaction rate of graphite and SiO with Li.

The method for calculating battery capacity characteristics of the present disclosure may contribute to the design of long-life batteries and batteries with stable cycle performance by providing parameters representing battery capacity characteristics relating to an actual usage rate of SiO which has weak durability.

Brief Description of Drawings

FIG. 1 is a block diagram illustrating a method for calculating battery capacity characteristics of the present disclosure.
FIG. 2 is a graph illustrating time series data for $C_6(t)$ and $C_{12}(t)$ of battery sample 1.
FIG. 3 is a graph illustrating structural changes of anodes of battery sample 1 (a) and battery sample 2 (b) over time.
FIG. 4 is a graph illustrating capacity retention according to cycling of battery sample 1 and battery sample 2.

Best Mode for Carrying Out the Invention

A method for calculating battery capacity characteristics of the present disclosure may include:

an anode preparation step of preparing an anode in which graphite is mixed with a test target SiO-based material;
a charging step of charging a battery including the anode;
a data collection step of collecting time series data for $C_{Li}$ which is a peak of Li, $C_6(t)$ which is a peak of $Li_2C_{12}$, and $C_{12}(t)$ which is a peak of $LiC_{12}$ by observing the anode with XRD; and
a parameter calculation step of calculating K which is a parameter for battery capacity characteristics based on the $C_{Li}$, $C_6(t)$, and $C_{12}(t)$ values, when a time differential value for the $C_6(t)$ or the $C_{12}(t)$ is 0.

In the anode preparation step of the method for calculating battery capacity characteristics of the present disclosure, the anode may be prepared so that a weight fraction of the test target SiO-based material in the anode is 0.15 or less.

In the anode preparation step of the method for calculating battery capacity characteristics of the present disclosure, the SiO-based material may be SiO doped with Li, Mg, or a mixture thereof.

In the charging step of the method for calculating battery capacity characteristics of the present disclosure, the battery may be fully charged so that a state of charge (SOC) becomes 100%.

In the data collection step of the method for calculating battery capacity characteristics of the present disclosure, the state of charge of the battery may be such that the SOC is maintained above 50%.

In the parameter calculation step of the method for calculating battery capacity characteristics of the present disclosure, K may be calculated by Equation 1 below:

[Equation 1]

$$K = \frac{C_{12}(t) \cdot C_{Li}}{C_6(t)}$$

The method for calculating battery capacity characteristics of the present disclosure, may further include, after the parameter calculation step, a determination step of determining a capacity characteristic state of the battery by comparing the K value and a weight fraction value of the test target SiO-based material in the anode.

A battery equipped with an anode containing an SiO-based material of the present disclosure may include an anode containing graphite and SiO-based materials; an anode current collector on which the anode is applied; a cathode containing lithium; a cathode current collector on which the cathode is applied; a separator stacked between the anode and the cathode; an electrolyte solution impregnated into the cathode and the anode; and a case accommodating the anode, the cathode, the anode current collector, the cathode current collector, the separator, and the electrolyte solution therein, wherein the anode contains the SiO-based material doped with Li, Mg, or a mixture thereof, and the K value calculated by the method according to claim 6 is 12 times or more than a weight fraction of the SiO-based material in

the anode.

Modes for Carrying Out the Invention

Hereinafter, embodiments according to the present disclosure will be described in detail with reference to the accompanying drawings. In this process, the size or shape of components shown in the drawings may be exaggerated for clarity and convenience of explanation. In addition, terms specifically defined in consideration of the configuration and operation of the present disclosure may vary according to the intentions or customs of users and operators. Definitions of these terms should be made based on the content throughout this specification.

In the description of the present disclosure, it should be noted that the orientation or positional relationship indicated by the terms such as "center", "upper", "lower", "left", "right", "vertical", "horizontal", "inner side", "outer side", "one surface", and "other surface" is based on the orientation or positional relationship shown in the drawing or the orientation or positional relationship normally arranged when using a product of the present disclosure, and it is not to be construed as limiting the present disclosures because it is intended merely for explanation and brief description of the present disclosure and does not suggest or imply that the device or element shown necessarily have a specific orientation and be configured or operated in a specific orientation.

FIG. 1 is a block diagram illustrating a method for calculating battery capacity characteristics of the present disclosure. FIG. 2 is a graph illustrating time series data for $C_6(t)$ and $C_{12}(t)$ of battery sample 1. FIG. 3 is a graph illustrating structural changes of anodes of battery sample 1 and battery sample 2 over time. FIG. 4 is a graph illustrating capacity retention according to cycling of battery sample 1 and battery sample 2.

Hereinafter, referring to FIGS. 1 to 4, a method for calculating battery capacity characteristics of the present disclosure is described in detail.

As shown in FIG. 1, a method for calculating battery capacity characteristics of the present disclosure may include:

an anode preparation step (S10) of preparing an anode in which graphite is mixed with a test target SiO-based material;
a charging step (S20) of charging a battery including the anode;
a data collection step (S30) of collecting time series data for $C_{Li}$ which is a peak of Li, $C_6(t)$ which is a peak of $Li_2C_{12}$, and $C_{12}(t)$ which is a peak of $LiC_{12}$ by observing the anode with XRD; and
a parameter calculation step (S40) of calculating K which is a parameter for battery capacity characteristics based on the $C_{Li}$, $C_6(t)$, and $C_{12}(t)$ values, when a time differential value for the $C_6(t)$ or the $C_{12}(t)$ is 0.

In a method for calculating battery capacity characteristics of the present disclosure, the analysis target is an anode containing an SiO-based material, specifically, a graphite-based material containing an SiO-based material, and more specifically, a graphite-based material containing SiO doped with Li, Mg, or the like.

In the anode preparation step (S10), the anode may be prepared so that a weight fraction of the test target SiO-based material in the anode is 0.15 or less. The weight fraction of the test target SiO-based material in the anode may be 0.01 or more, 0.03 or more, or 0.05 or more, and 0.15 or less, 0.12 or less, or 0.10 or less.

A method for calculating battery capacity characteristics of the present disclosure may provide parameters that can determine performance, such as the stability of battery life, which varies depending on the characteristics (doping material, degree of doping, etc.) of the SiO-based material contained in the anode, for example, the rate of change in capacity retention depending on the number of cycles.

A method for calculating battery capacity characteristics of the present disclosure may determine whether the test target SiO-based material can guarantee life stability for the battery by analyzing a battery equipped with an anode containing the test target SiO-based material. More specifically, the impact of SiO-based materials on battery life stability may be provided as a quantified parameter. For example, a method for calculating battery capacity characteristics of the present disclosure may be performed for a lithium secondary battery equipped with an anode containing a test target SiO-based material.

In the anode preparation step (S10), the SiO-based material may be SiO doped with Li, Mg, or a mixture thereof. A method for calculating battery capacity characteristics of the present disclosure may provide the degree of guarantee of battery life stability as a quantified parameter even for an SiO-based material whose doping state is unknown.

In the charging step (S20), the battery may be fully charged so that a state of charge (SOC) becomes 100%. When charging the lithium secondary battery, lithium ions move to the anode and may be reduced to lithium atoms at the anode. By analyzing the state at this time, the method for calculating battery capacity characteristics of the present disclosure may calculate the value of K.

In the data collection step (S30), the state of charge of the battery may be such that the SOC is maintained above 50%. In the data collection step (S30), most preferably, the XRD measurement is performed in a fully charged

state, but depending on the analysis situation, the XRD measurement may be performed in a state of charge with the SOC maintained at 50% or more. During XRD measurement, the battery may be simply fixed to the XRD stage, or if self-discharge is fast, it may be mounted on the XRD stage with the charging module connected. XRD measurements may be performed in-situ to observe changes in the battery.

In the data collection step (S30), XRD measurements may be performed in set time units. The set time may be from 2 hours to 8 hours. Preferably, the set time may be 4 hours to 6 hours. For example, the set time may be about 4 hours. In other words, in the data collection step (S30), XRD measurement may be performed approximately every 4 hours. A battery equipped with an anode containing an SiO-based material may be stabilized in about 60 hours. Therefore, XRD measurements may be performed at set time intervals for a period of 40 hours to 100 hours. In other words, the XRD measurement may be performed repeatedly at set time intervals until the anode is stabilized.

The data collected in the data collection step (S30) may be fitted and calculated as a function of time t. Specifically, among the XRD measurement data, $C_6(t)$ which is the peak of $Li_2C_{12}$ and $C_{12}(t)$ which is the peak of $LiC_{12}$ may be fitted as a function.

In the parameter calculation step (S40), the value of K may be calculated based on the reversible reaction of the anode,

$$Li_2C_{12} \rightleftharpoons LiC_{12} + Li$$

by Equation 1 below. In the present specification, $Li_2C_{12}$ may be expressed as LiCe for convenience, and in Equation 1 below, $C_6$ refers to the concentration of $Li_2C_{12}$, and $C_{12}$ refers to the concentration of $LiC_{12}$.

[Equation 1]

$$K = \frac{C_{12}(t) \cdot C_{Li}}{C_6(t)}$$

In the parameter calculation step (S40), the values of $C_6(t)$ and $C_{12}(t)$ to which Equation 1 is applied may be values that converge to a specific value after sufficient time. Specifically, the values of $C_6(t)$ and $C_{12}(t)$ at t when the time differential values of $C_6(t)$ and $C_{12}(t)$ are 0 may be applied to Equation 1.

As shown in FIG. 1, after the parameter calculation step (S40), a determination step (S50) of determining a capacity characteristic state of the battery by comparing the K value and a weight fraction value of the test target SiO-based material in the anode may be further included. Specifically, it may be determined that the greater the value divided by the weight fraction value of the test target SiO-based material in the anode from the K value, the better the life stability of the battery (e.g., less decrease in capacity retention as the number of cycles increases). For example, when the K value divided by the weight fraction of the test target SiO-based material in the anode is 12 or more, 20 or more, 30 or more, or 40 or more, it can be determined that the life stability of the battery is secured.

A battery equipped with an anode containing an SiO-based material of the present disclosure may include:

an anode containing graphite and SiO-based materials;
an anode current collector on which the anode is applied;
a cathode containing lithium;
a cathode current collector on which the cathode is applied;
a separator stacked between the anode and the cathode;
an electrolyte solution impregnated into the cathode and the anode; and
a case accommodating the anode, the cathode, the anode current collector, the cathode current collector, the separator, and the electrolyte solution therein,
wherein the anode contains the SiO-based material doped with Li, Mg, or a mixture thereof, and
the K value calculated by the method for calculating battery capacity characteristics is 12 times or more, 20 times or more, 30 times or more, or 40 times or more than a weight fraction of the SiO-based material in the anode.

The anode may be a mixture of an anode active material, a conductive material and a binder. The anode active material may include graphite and SiO-based materials.

The cathode may be a mixture of a cathode active material, a conductive material and a binder. The cathode active material may include lithium.

For example, the anode current collector may be Cu foil, and the cathode current collector may be Al foil.

Example

Two types of SiO-based materials with unknown compositions were prepared, and two types of anodes were prepared to have a weight fraction of 0.1 for each SiO-based material, and a battery was manufactured for each anode to prepare battery sample 1 and battery sample 2.

Battery sample 1 and battery sample 2 were fully charged to a SOC of 100%, and then XRD measurements were performed every 4 hours at a temperature of 60°C to collect data for each battery.

From the XRD measurement data for each of battery sample 1 and battery sample 2, $C_{Li}$ which is the peak of Li, $C_6(t)$ which is the peak of $Li_2C_{12}$, and $C_{12}(t)$ which is the peak of $LiC_{12}$ were calculated, respectively.

For the calculated $C_{Li}$, $C_6(t)$, and $C_{12}(t)$, at the point where t is sufficiently large (the point where the differential value is 0), Equation 1 was applied to calculate the K value for each of battery sample 1 and battery sample 2. FIG. 2 is a graph illustrating time series data for $C_6(t)$ and $C_{12}(t)$ of battery sample 1. As shown in FIG. 2, K was calculated at a value where t is 100 or more, where $C_6(t)$ and $C_{12}(t)$ are parallel.

Battery sample 1 was calculated with a K value of 4.10, and battery sample 2 was calculated with a K value of 1.14.

FIG. 3 is a graph illustrating structural changes of anodes of battery sample 1 and battery sample 2 over time. In FIG. 3, (a) is a graph for battery sample 1, and (b) is a graph for battery sample 2. In FIG. 3, the color variable refers to the peak in the XRD measurement value, and if it is red, it may be a large peak, and if it is blue, it may be a small peak. Referring to FIG. 3, it can be seen that the change in LiCe over time in battery sample 2 (b) is slower than in battery sample 1 (a). This means that it reacts better with SiO, indicating that the lifespan characteristics of the electrode are not good.

FIG. 4 is a graph illustrating capacity retention according to cycle of battery sample 1 and battery sample 2. In FIG. 4, battery sample 1 and battery sample 2 are manufacture in pairs, and the results of charging and discharging each of them are shown.

As shown in FIG. 4, it can be seen that battery sample 1 which has a higher K value shows better capacity retention according to the number of cycles than battery sample 2.

Although embodiments according to the present disclosure have been described above, they are merely illustrative, and those skilled in the art will understand that various modifications and equivalent scope of embodiments are possible therefrom. Therefore, the true technical protection scope of the present disclosure should be determined by the appended claims.

Industrial Applicability

A method for calculating battery capacity characteristics of the present disclosure may be to select SiO-based materials by quantifying the reaction rate of graphite and SiO with Li.

The method for calculating battery capacity characteristics of the present disclosure may contribute to the design of long-life batteries and batteries with stable cycle performance by providing parameters representing battery capacity characteristics relating to the actual usage rate of SiO which has weak durability.

## Claims

1. A method for calculating battery capacity characteristics, the method comprising:

   preparing an anode in which graphite is mixed with a test target SiO-based material;
   charging a battery comprising the anode;
   collecting time series data for $C_{Li}$ which is a peak of Li, $C_6(t)$ which is a peak of $Li_2C_{12}$, and $C_{12}(t)$ which is a peak of $LiC_{12}$ by observing the anode with X-Ray Diffraction (XRD); and
   calculating a value of K which is a parameter for battery capacity characteristics based on $C_{Li}$, $C_6(t)$, and $C_{12}(t)$ , when a time differential value for the $C_6(t)$ or the $C_{12}(t)$ is 0.

2. The method of claim 1, wherein the anode is prepared such that a weight fraction of the test target SiO-based material in the anode is 0.15 or less.

**3.** The method of claim 1, wherein the SiO-based material is SiO doped with Li, Mg, or a mixture thereof.

**4.** The method of claim 1, wherein charging the battery comprises charging the battery to a 100% state of charge (SOC).

**5.** The method of claim 4, wherein, when collecting time series data, the SOC of the battery is maintained above 50%.

**6.** The method of claim 1, wherein the value of K is calculated according to Equation 1:

[Equation 1]

$$K = \frac{C_{12}(t) \cdot C_{Li}}{C_6(t)}$$

.

**7.** The method of claim 6, further comprising:
determining a capacity characteristic state of the battery by comparing the value of K and a weight fraction value of the test target SiO-based material in the anode.

**8.** A battery equipped with an anode containing an SiO-based material, comprising:

an anode comprising graphite and an SiO-based material;
an anode current collector on which the anode is applied;
a cathode containing lithium;
a cathode current collector on which the cathode is applied;
a separator between the anode and the cathode;
an electrolyte solution impregnated into the cathode and the anode; and
a case accommodating the anode, the cathode, the anode current collector, the cathode current collector, the separator, and the electrolyte solution therein,
wherein the SiO-based material is doped with Li, Mg, or a mixture thereof, and
the value of K calculated by the method according to claim 6 is 12 times or more than a weight fraction of the SiO-based material in the anode.

[FIG. 1]

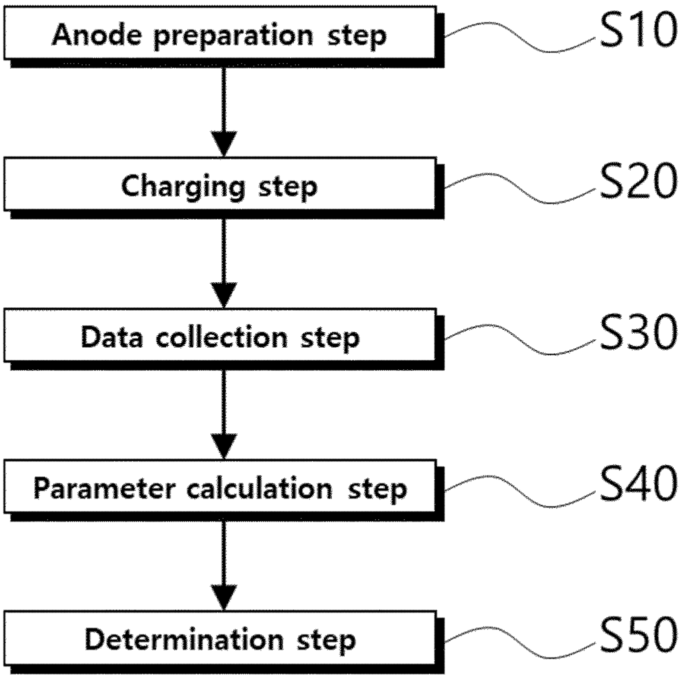
Anode preparation step
S10
Charging step
S20
Data collection step
S30
Parameter calculation step
S40
Determination step
S50

[FIG. 2]

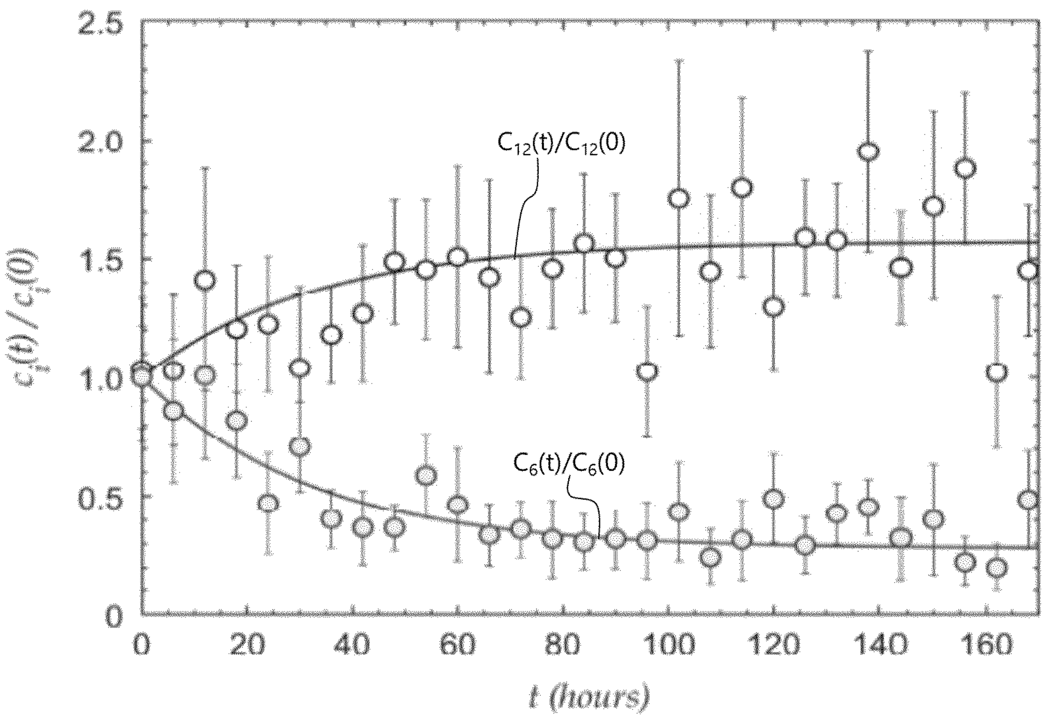
C12(t)/C12(0)
C6(t)/C6(0)
ci(t) / ci(0)
t (hours)
0
0.5
1.0
1.5
2.0
2.5
20
40
60
80
100
120
140
160

[FIG. 3]

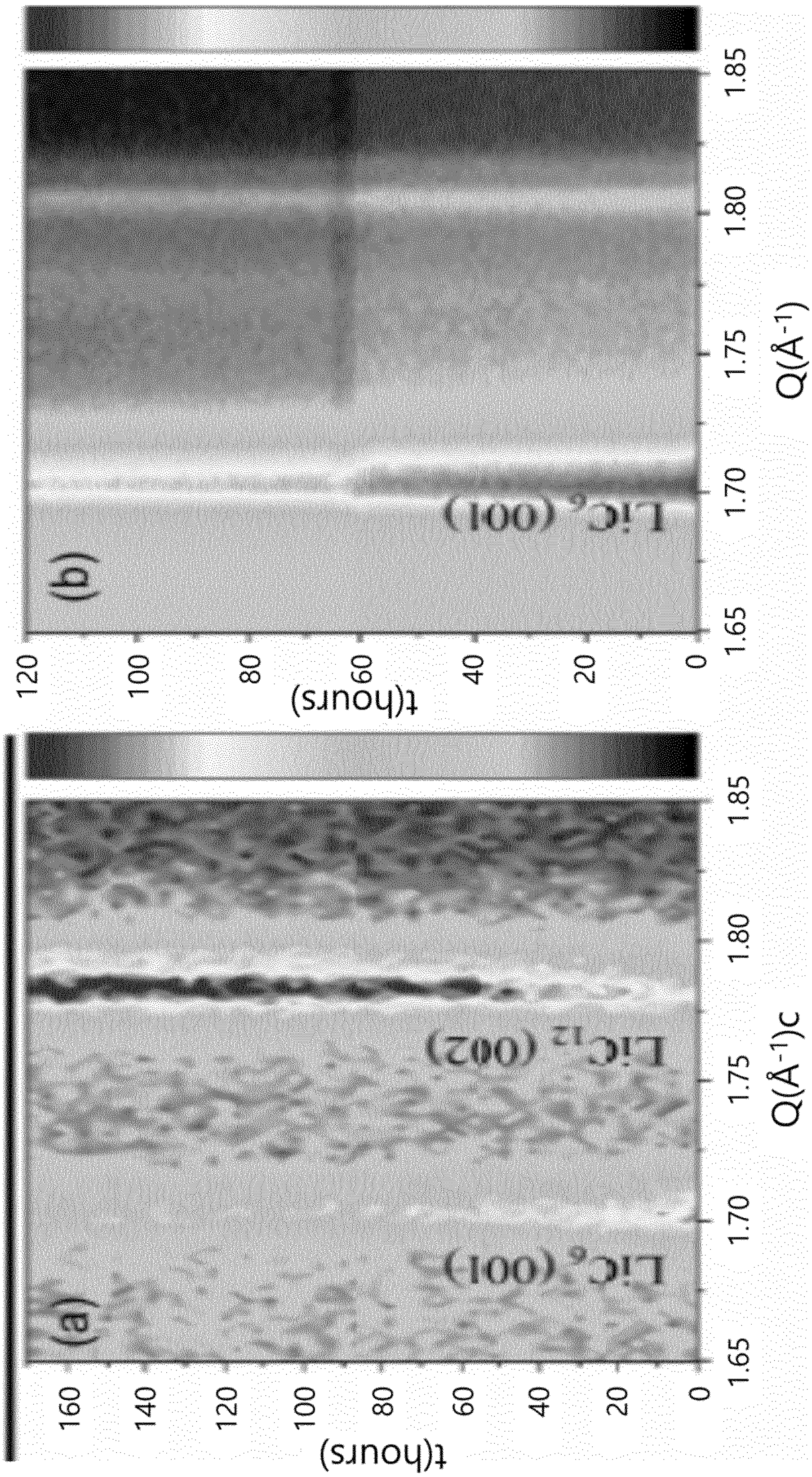
(a)
(b)
LiC6 (001)
LiC12 (002)
t(hours)
Q(Å-1)
1.65
1.70
1.75
1.80
1.85
0
20
40
60
80
100
120
140
160

[FIG. 4]

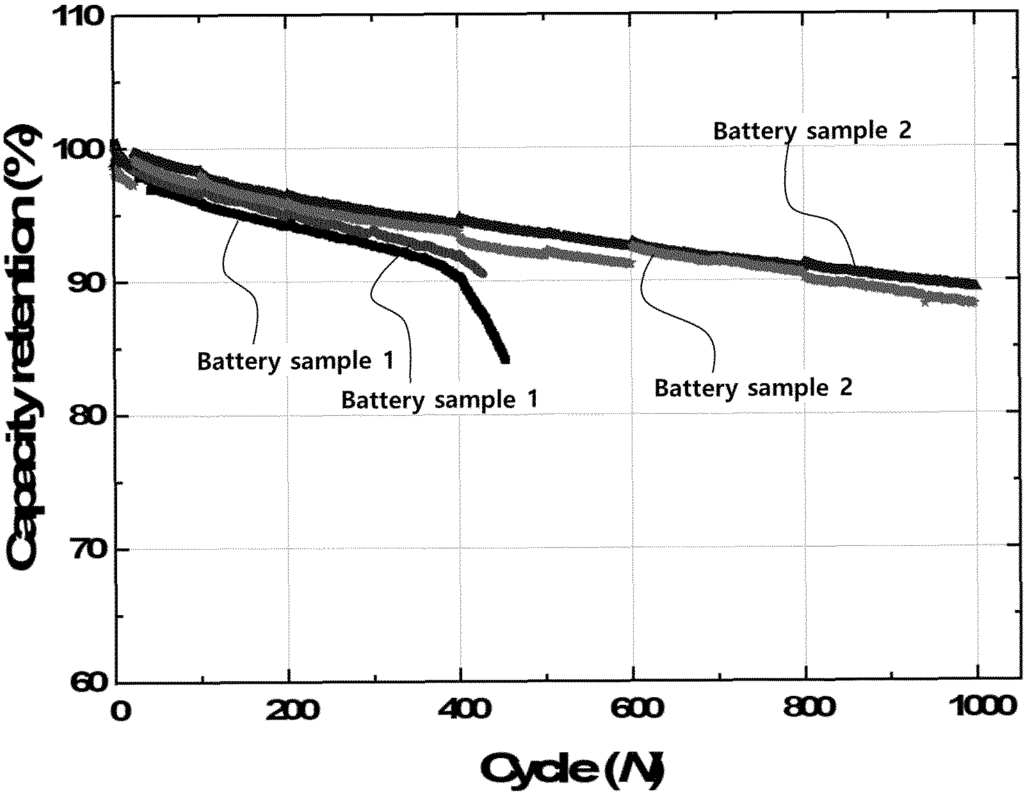

Capacity retention (%)
110
100
90
80
70
60
0
200
400
600
800
1000
Cycle (N)
Battery sample 2
Battery sample 1
Battery sample 1
Battery sample 2

**INTERNATIONAL SEARCH REPORT**

International application No.
**PCT/KR2023/013610**

**A. CLASSIFICATION OF SUBJECT MATTER**

**H01M 4/48**(2010.01)i; **H01M 10/0525**(2010.01)i; **G01N 23/20**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/48(2010.01); G01N 23/207(2006.01); G01R 31/367(2019.01); G01R 31/392(2019.01); H01M 10/04(2006.01); H01M 10/052(2010.01); H01M 10/48(2006.01); H01M 4/13(2010.01); H01M 4/131(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 흑연(graphite), 규소(silicon), 음극(anode), X선 회절(XRD), 피크(peak), 리튬(lithium), 용량(capacity), Li2C12, LiC12

**C. DOCUMENTS CONSIDERED TO BE RELEVANT**

| Category* | Citation of document, with indication, where appropriate, of the relevant passages | Relevant to claim No. |
|---|---|---|
| A | US 2016-0123906 A1 (GM GLOBAL TECHNOLOGY OPERATIONS LLC.) 05 May 2016 (2016-05-05)<br>See claims 1 and 17-18; and paragraphs [0020], [0029] and [0033]. | 1-8 |
| A | KR 10-2015-0057730 A (SAMSUNG SDI CO., LTD.) 28 May 2015 (2015-05-28)<br>See claims 1, 7 and 18; paragraphs [0030], [0065], [0068] and [0073]; and figure 1. | 1-8 |
| A | JP 2016-051642 A (KOBELCO KAKEN K. K.) 11 April 2016 (2016-04-11)<br>See entire document. | 1-8 |
| A | KR 10-2021-0062263 A (HYUNDAI MOTOR COMPANY et al.) 31 May 2021 (2021-05-31)<br>See entire document. | 1-8 |
| A | KR 10-2022-0118070 A (SK ON CO., LTD.) 25 August 2022 (2022-08-25)<br>See entire document. | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 December 2023** | **26 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/013610**

| Patent document cited in search report | Publication date (day/month/year) | Patent family member(s) | Publication date (day/month/year) |
|---|---|---|---|
| US 2016-0123906 A1 | 05 May 2016 | CN 105572155 A | 11 May 2016 |
| | | US 9778212 B2 | 03 October 2017 |
| KR 10-2015-0057730 A | 28 May 2015 | US 2015-0140434 A1 | 21 May 2015 |
| | | US 9799877 B2 | 24 October 2017 |
| JP 2016-051642 A | 11 April 2016 | None | |
| KR 10-2021-0062263 A | 31 May 2021 | None | |
| KR 10-2022-0118070 A | 25 August 2022 | CN 114975903 A | 30 August 2022 |
| | | KR 10-2023-0042447 A | 28 March 2023 |
| | | KR 10-2511822 B1 | 17 March 2023 |
| | | KR 10-2521407 B1 | 12 April 2023 |
| | | US 11791458 B2 | 17 October 2023 |
| | | US 2022-0263071 A1 | 18 August 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220116792